# EUROPEAN PATENT APPLICATION

(11) **EP 2 056 508 A1**
(43) Date of publication of application: **06.05.2009**
(21) Application number: 07021223.8
(22) Date of filing: 30.10.2007
(51) Int. Cl.: H04L 1/00

(54) **Implicit masking for transmitting a control signal**

(71) Applicant: Nokia Siemens Networks Oy, 02610 Espoo (FI)
(72) Inventor: Frederiksen, Frank, 9270 Klarup (DK); Kolding, Troels, 9270 Klarup (DK)
(74) Representative: Eisenführ, Speiser & Partner

(57) **Abstract**

The present invention relates to methods, apparatuses, a system, and computer program products for signaling control information via a transmission link, wherein an error checking pattern of a transmission signal is masked in response to a state of the control information to obtain a predetermined syndrome. The transmission signal with the error checking pattern is transmitted via the transmission link. At the receiving end, an error is checked by using the error checking pattern received with the transmission signal, and the state of the control information is determined based on a syndrome obtained from the checking.

## Description

### FIELD OF THE INVENTION

The present invention relates to methods and apparatuses for signaling control information, such a for example a scheduling request, via a transmission link.

### BACKGROUND OF THE INVENTION

Uplink (UL) scheduling in wireless systems is gaining importance due to arising uplink intensive data services (file transfer protocol (ftp), image uploads etc.), which could be hampered by the currently in-built asymmetry in favor of the downlink (DL) direction.

However, a scheduler of a base station or access device (i.e. "Node B" in 3^{rd} generation (3G) terminology) has no direct information about the data that is to be transmitted from mobile terminals (or "user equipments" (UEs) in 3G terminology) Thus the UEs are required to indicate the amount of data available, the priority of the data, the transmitter power available etc. to the Node B through scheduling requests. When the Node B has received the scheduling request from the UE and has decided to schedule the UE based on the received scheduling requests, it transmits an uplink resource allocation or grant, also denoted scheduling grant indicator, to the UE, indicating the amount of data or actually with which power the UE is allowed to transmit. Thus, before an uplink data burst can be transmitted, the UE must first transmit a scheduling request to the Node B, to inform the Node B that data is available for transmission.

In the long term evolution (LTE) concept of mobile communication systems according to the 3rd Generation Partnership Project (3GPP) specifications, possible multiple access techniques may be OFDMA (Orthogonal Frequency Division Multiple Access) for downlink direction, and single carrier frequency division multiple access (SC_FDMA) for uplink direction. When considering the uplink direction, the Node B is in full control of which UEs are scheduled and by which amount. As such the Node B needs information about the current buffer status from each active UE. However, by doing this in a regular way (i.e. by scheduling and transmitting full buffer reports), excessive uplink traffic is caused just to keep the Node B updated.

As the Node B 20 has no chance of knowing that there is a scheduling request, it could always reserve some physical uplink resources for scheduling requests along with uplink data resources, such that there is always capacity for potentially transmitting the additional scheduling requests. The disadvantage of this option is that each UL data transmission will have to have some reserved resources that are potentially not used. As another option, the resource requests could be signalled as a higher layer signalling, meaning that for instance an additional small packet data unit of the Media Access Control (MAC) layer is sent whenever needed. A disadvantage of this option is that it will take additional data capacity (especially the associated headers will give additional overhead), and that constant bit rate services like voice over Internet Protocol (VoIP) will suffer from occasional overload of traffic. Further, sending MAC packets for scheduling requests will also imply that there will be an additional delay compared to signalling on the lower physical layer.

### SUMMARY OF THE INVENTION

It is an object of the present invention to provide a mechanism for signaling control information at low additional overhead.

This object is achieved by a method of signaling control information via a transmission link, said method comprising:
- masking an error checking pattern of a transmission signal in response to a state of said control information to obtain a predetermined syndrome; and
- transmitting said transmission signal with said error checking pattern via said transmission link.

Additionally, the above object is achieved by a method of signaling control information via a transmission link, said method comprising:
- checking an error by using an error checking pattern received with a transmission signal; and
- determining a state of said control information based on a syndrome obtained from said checking.

The above methods may be implemented as computer program products comprising code means for producing the respective above steps when run on a computer device.

Furthermore, the above object is achieved by an apparatus for signaling control information, said apparatus comprising:
- masking means for masking an error checking pattern of a transmission signal in response to a state of said control information to obtain a predetermined syndrome; and
- transmitting means for transmitting said transmission signal with said error checking pattern via said transmission link.

Moreover, the above object is achieved by an apparatus for receiving control information via a transmission link, said apparatus comprising:
- checking means for checking an error by using an error checking pattern received with a transmission signal; and
- determination means for determining a state of said control information based on a syndrome obtained from said checking means.

The above apparatuses may be implemented as network elements or nodes, access devices, fixed or mobile terminal devices, or as modules, chips or chip sets provided in these nodes, elements or devices.

Accordingly, a signaling option is provided, which will put the error correction syndrome into different states depending on the state or content of the control information. That is, when checking the error correction output at the receiving side, an obtained syndrome of a predefined value or pattern means that the packet was received correctly and that the control information has a predetermined value (which could mean for example that no uplink data is requested). An advantage of this principle is that fast signalling can be combined with retransmission gain of the control information. Moreover, retransmission error protection as well as fast decoding of the control information can be achieved.

Hence, zero overhead can be provided for scheduling requests at the expense of slightly lower error detection capability. For persistent allocations, significant delays can be prevented, as explicit indication of scheduling requests is no longer required.

According to a specific but non-limiting aspect, the error checking pattern may be a cyclic redundancy checking code. However, any other error checking pattern can be used as long as the proposed masking can be used to control a syndrome or checking result generated at the receiving end based on an error checking operation.

According to another specific but non-limiting aspect, the control information may be a scheduling request. However, any other type or kind of control information required at the receiving end or at an intermediate network node or element could be signaled by the masking operation. The scheduling request is in no way specific or essential to the present invention. It is considered as a mere example of control information which could be signaled via the transmission link.

In a specific example, the syndrome may be set by the masking operation to one of two predetermined bit patterns depending on whether there is a scheduling request or not. These two predetermined bit patterns may for example comprise a first bit pattern where all bits of the syndrome are zero and a second bit pattern where all bits of the syndrome are one. Of course, other masking operations could be possible, which lead to more states or patterns of the syndrome, to thereby signal control information with more than two states. It should just be noted that increasing the number of states will reduce the error detection capabilities significantly.

As an exemplary simple masking operation, all bits of the error checking pattern my be inverted at the transmitting side of the control information. This may be achieved by a logical Exclusive-OR (XOR) gate or operation or other inverter circuits,

As an example, the syndrome may be obtained by calculating an error checking pattern based on the transmission signal and comparing it with the error checking pattern received with the transmission signal.

Further advantageous modifications are defined in dependent claims.

### BRIEF DESCRIPTION OF THE DRAWINGS

The present invention will now be described based on embodiments with reference to the accompanying drawings in which:
Fig. 1 shows a schematic diagram indicating a network architecture in which the present invention can be implemented;
Fig. 2 shows schematic block diagrams of a transmitter and a receiver according to embodiments of the present invention;
Fig. 3 shows flow diagram of a transmitter-side processing according to an embodiment of the present invention;
Fig. 4 shows flow diagram of a receiver-side processing according to an embodiment of the present invention; and
Fig. 5 shows a schematic block diagram of a software-based implementation according to an embodiment of the present invention.

### DESCRIPTION OF THE EMBODIMENT

In the following, embodiments of the present invention will be described based on a signaling of a scheduling request (as a specific but non-limiting example of the control information) for uplink transmission in a wireless communication network.

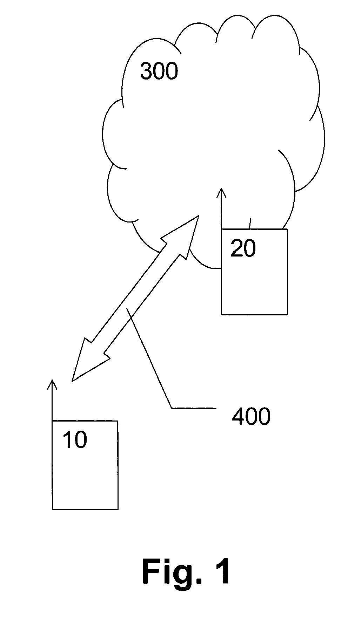

Fig. 1 shows a schematic diagram of a general network architecture in which the present invention can be implemented. A radio access network 300, e.g., Universal Mobile Telecommunications System (UMTS) Terrestrial Access Network (UTRAN) according to the Long Term Evolution (LTE) or 3^{rd} Generation Partnership Project (3GPP) Release 8 standard, provides access to a UE 10 via an access device 20, e.g., a base station device (eNodeB or Node B), which exchange retransmission signaling 400 to provide an error correction.

In the embodiment, it is assumed that the uplink scheduling request is caused by a pending transmission to the Node B 20. When having such a scheduling request, the UE 10 can be in various situations, where the scheduling request can be transmitted along with associated uplink control signalling (e.g. CQI reports and/or ACK/NACK for DL traffic), as well as along with scheduled uplink data traffic. The embodiment is related to the situation where the UE 10 is being scheduled for data transmission (i.e., we want to transmit the scheduling request along with the uplink payload data).

According to the embodiment, an error checking code or pattern (e.g. a cyclic redundancy code (CRC)) added or appended to a transport block is masked or modified to set a syndrome obtained after checking at the receiving side to a predetermined state or pattern. Thereby, the masking and subsequent transmission operations can be used to signal control information, such as a scheduling request, to the receiving side.

In general, error correction code (ECC) logic is provided to generate an ECC code or error checking pattern, also called check bits, which corresponds to a particular data value or block. The ECC is typically used for forward error correction (e.g. convolutional or Turbo code), while EDC (error detecting codes) like CRC are typically used for checking the validity of a packet. When the data is read back from memory or transmitted via a transmission link, the EDC check bits are again calculated and compared with the originally generated EDC bits in order to test the system memory or the reliability of the transmission link. The difference in these EDC check bits is the syndrome which, if not zero, indicates that an error has occurred. In the specific example of a CRC error checking procedure, a block of data may be considered as coefficients to a polynomial and may then be divided by a fixed, predetermined polynomial. The coefficients of the result of the division are taken as redundant data bits, the CRC pattern. On reception, the CRC pattern can be recomputed from the payload bits and compared with the CRC pattern that was received. A mismatch which leads to a non-zero syndrome indicates that an error occurred.

In the present embodiment, the error checking pattern is masked to modify or set the syndrome to a desired value, state or pattern in order to signal the uplink scheduling request (or any other suitable control information) to the receiving end.

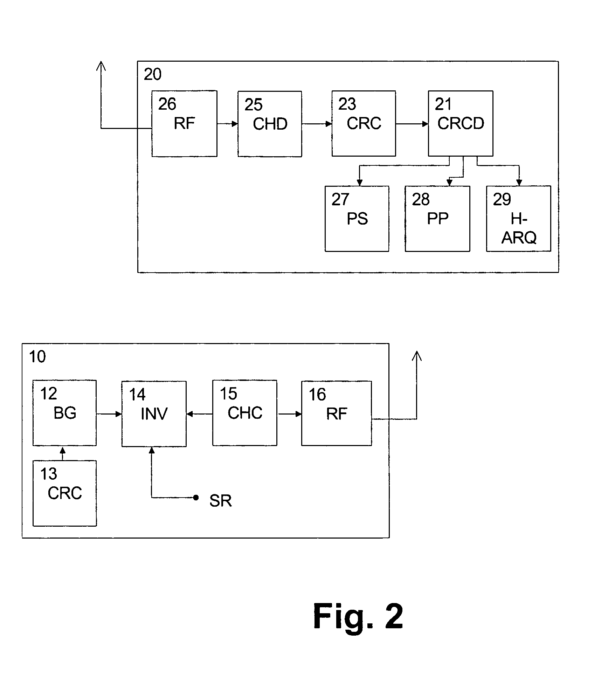

Fig. 2 shows schematic block diagrams of a transmitter (e.g. the UE 10) and a receiver (e.g. the Node B 20) according to an embodiment of the present invention. At the UE 10, a CRC pattern is generated at an error checking functionality or unit 13 based on the payload of a transport block to be transmitted. A block generator functionality or unit (BG) 12 adds or appends the obtained CRC pattern or check bits to a transport block and supplies the transport block to a masking functionality or unit 14 which is adapted to masks the CRC pattern in a manner to obtain a predetermined syndrome as a checking result at the receiving end, i.e., at the Node B 20. The masking unit 14 is controlled by the desired control information (scheduling request or not in this example) to implicitly mask the CRC pattern in dependence on the state or value of the control information. Then, the transport block with the masked CRC pattern is supplied to a channel coding functionality or unit (CHC) 15 which applies a channel coding. The channel-coded transport block is then supplied to an RF front-end unit 16 in order to be transmitted via an antenna.

At the Node B 20, the transmitted channel-coded transport block with the masked CRC pattern is received via an antenna and an RF front-end unit 26. The received transport block is supplied to a channel decoding functionality or unit (CHD) 25 for channel decoding and the decoded transport block is then supplied to a CRC calculation functionality or unit 23 which is adapted to calculate a CRC pattern based on the payload of the transport block. The obtained CRC pattern is supplied to a CRC checking functionality or unit (CRCD) 21 which extracts the masked CRC pattern from the transport block and calculates the difference between the calculated CRC pattern and the extracted masked CRC pattern in order to obtain a syndrome.

Based on the state, value or pattern of the syndrome, the received transport block is forwarded to a packet scheduling functionality or unit (PS) 27 (if the syndrome indicates that a scheduling request is made and no error has occurred during transmission), to a packet processing functionality or unit (PP) 28 (if the syndrome indicates that no scheduling request is made and no error has occurred during transmission), or to a retransmission functionality or unit (H-ARQ) 29 (if the syndrome indicates that an error has occurred during transmission).

The retransmission procedures initiated by the retransmission unit 29 can be used for error correction purposes, wherein the receiving side or end (i.e. Node B 20) can request retransmissions of incorrectly received data packets. H-ARQ (Hybrid Automatic Repetition Request) is a more advanced form of an ARQ retransmission scheme. In conventional ARQ schemes the receiver checks if a packet is received correctly. If it is not received correctly, the erroneous packet is discarded and a retransmission is requested. With HARQ the erroneous packet is not discarded. Instead the packet is kept and combined with a result of the retransmission. That implies that even if both the first transmission and the retransmission are erroneous, they may be combined to a correct packet. This means that fewer retransmissions are required.

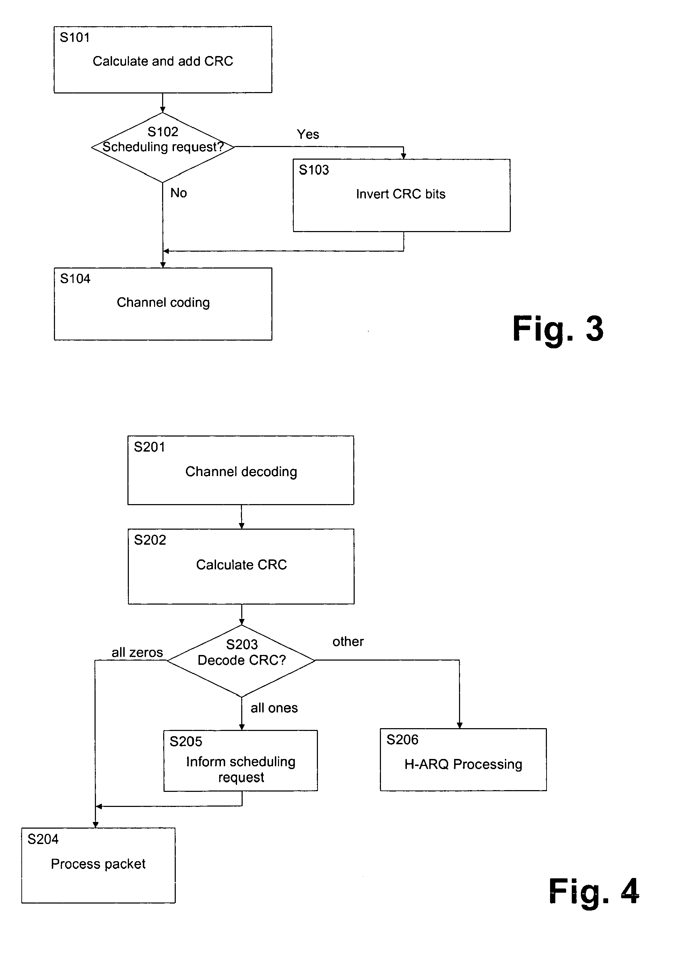

Fig. 3 shows flow diagram of a transmitter-side processing according to an embodiment of the present invention, where the control information is a scheduling request.

In step S101, the CRC pattern is calculated and added to the desired transmission signal. Then, it is checked in step S102 whether a scheduling request is to be made. If so, the CRC pattern or check bits are masked (e.g. inverted) in step S103 and channel coding is applied in step S104. If it is determined in step S102 that no scheduling request is required, the masking in step S103 is skipped and procedure branches directly to step S104 for channel coding without masked CRC pattern.

Thus, in the exemplary implementation of Fig. 3 - which could be implemented based on a processing algorithm in the UE 10 - if there is no scheduling request, the channel coding of the data packet is just continued, while if there is a scheduling request, all bits of the CRC pattern are inverted (which corresponds and can thus be realized as a logical Exclusive-OR operation) and the channel coding of the data packet is performed thereafter.

Fig. 4 shows flow diagram of a receiver-side processing according to an embodiment of the present invention.

In step S201, the received transport block or data packet is supplied to a channel decoding operation and in step S202 a new CRC pattern is calculated based on the decoded data (e.g. payload). Then, the CRC pattern is decoded in step S203 by comparing it with the received CRC pattern. This decoding provides a syndrome based on which the further procedure is branched off.

The exemplary implementation according to Fig. 4 could be based on a processing algorithm in the Node B 20, and the procedure could be branched off to the following branches:

As the inversion step S103 (e.g. exclusive-OR inversion operation) of Fig. 3 at the transmitting side (i.e. UE 10) is non-intrusive, it is possible to perform the operation before as well as after the CRC calculation in the receiver part, so that, after channel decoding in step S201, the CRC is calculated on the packet in step S202, and the output of the CRC decoding in step S203 (the syndrome) can be interpreted in several ways. If there is a sequence of only zero-bits (all-zeros), the packet is OK, and no scheduling request is determined. Thus, the procedure branches to a normal packet processing step S204. If there is a sequence of only one-bits (all-ones), the packet is OK, and a scheduling request is signalled or informed. Thus, the procedure is branched off to a packet scheduling step S205 (or any other processing which is triggered by the control information, if it is not a scheduling request) and thereafter to the normal packet processing in step S204. In any other case, the packet is assumed to be in error, meaning that a H-ARQ retransmission in step S206 will be activated, such that a retransmission is requested. Thereby, fast signalling can be combined with the H-ARQ gain of scheduling requests.

It is noted that the syndrome must not necessarily be an all-zero or all-one pattern. It can be any predefined pattern. Additionally, the CRC bit field or pattern could be forwarded in multiple different states, so as to be usable for control signalling. As an example, a UE-specific masking of the CRC pattern could be used. In such a cese, the CRC of a transmitted packet could be masked with an identity or identification pattern (e.g. UE ID) of the UE 10, to assist detection in case of persistent allocations. At the receiving side, a CRC masked by an inverse or opposite pattern of the UE identity or identification pattern, to obtain the desired syndrome. Of course, other maskings would be possible based on desired syndrome patterns.

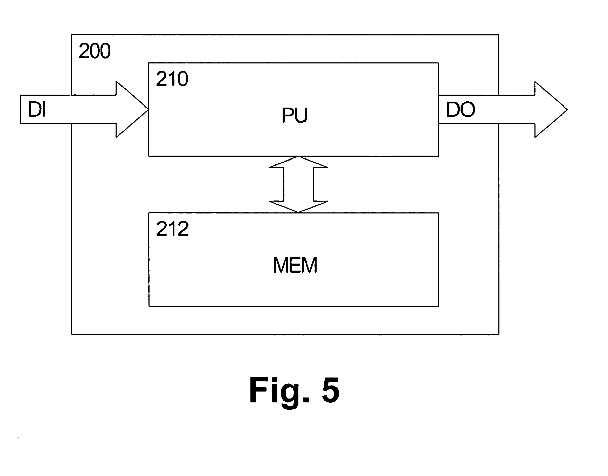

Fig. 5 shows a schematic block diagram of an alternative software-based implementation of the proposed embodiments for achieving robust retransmission signaling. The required functionalities can be implemented in any receiver, transmitter or transceiver module 200 with a processing unit 210, which may be any processor or computer device with a control unit which performs control based on software routines of a control program stored in a memory 212. The control program may also be stored separately on a computer-readable medium. Program code instructions are fetched from the memory 212 and are loaded to the control unit of the processing unit 210 in order to perform the processing steps of the above functionalities of Figs. 3 and 4, which may be implemented as the above mentioned software routines. The processing steps may be performed on the basis of input data DI and may generate output data DO. At the data transmission side the input data DI may correspond to an input of the desired control information (e.g. scheduling request) and at the data reception side the input data DI may correspond to the received data packet or block with the (masked) error check bits, while at the data transmission side the output data DO may correspond to the data packet or block with the (masked) error check bits to be transmitted and at the data reception side the output data DO may correspond to the syndrome pattern or the result of steps S204 to S206.

Consequently, the above embodiments may be implemented as a computer program product comprising code means for generating each individual step of the signaling procedure when run on a computer device or data processor of the receiving device (e.g. NodeB 20) or transmitting device (e.g. UE 10), respectively.

In summary, methods, apparatuses, a system, and computer program products for signaling control information via a transmission link have been described, wherein an error checking pattern of a transmission signal is masked in response to a state of the control information to obtain a predetermined syndrome. The transmission signal with the error checking pattern is transmitted via the transmission link. At the receiving end, an error is checked by using the error checking pattern received with the transmission signal, and the state of the control information is determined based on a syndrome obtained from the checking.

It is apparent that the invention can easily be extended to any transmission link for any kind of control information in any kind of network which supports transmission of an error checking pattern. Specifically, the present invention is not intended to be restricted to cellular or wireless networks. The embodiment may thus vary within the scope of the attached claims. Further more, while the invention has been described mainly for the case that the Node B 20 is the receiving device and the UE 10 is the transmitting device, this can be reversed as well and other devices can take the respective role as well.

## Claims

1. A method of signaling control information via a transmission link, said method comprising:
a) masking an error checking pattern of a transmission signal in response to a state of said control information to obtain a predetermined syndrome; and
b) transmitting said transmission signal with said error checking pattern via said transmission link.

2. A method of signaling control information via a transmission link, said method comprising:
a) checking an error by using an error checking pattern received with a transmission signal; and
b) determining a state of said control information based on a syndrome obtained from said checking.

3. The method according to claim 1 or 2, wherein said error checking pattern is a cyclic redundancy checking code.

4. The method according to any one of the preceding claims, wherein said control information is a scheduling request.

5. The method according to claim 4, wherein said masking is adapted to set said syndrome to one of two predetermined bit patterns depending on whether there is a scheduling request or not.

6. The method according to claim 5, wherein said two predetermined bit patterns comprise a first bit pattern where all bits of said syndrome are zero and a second bit pattern where all bits of said syndrome are one.

7. The method according to claim 1, wherein said masking comprises inverting all bits of said error checking pattern.

8. The method according to claim 2, wherein said syndrome is obtained by calculating an error checking pattern based on said transmission signal and comparing it with said error checking pattern received with said transmission signal.

9. An apparatus for signaling control information, said apparatus (10) comprising:
a) masking means (14) for masking an error checking pattern of a transmission signal in response to a state of said control information to obtain a predetermined syndrom; and
b) transmitting means (16) for transmitting said transmission signal with said error checking pattern via said transmission link.

10. The apparatus according to claim 9, wherein said error checking pattern is a cyclic redundancy checking code.

11. The apparatus according to claim 9 or 10, wherein said control information is a scheduling request.

12. The apparatus according to claim 11, wherein said masking means (14) is adapted to mask said error checking pattern in a manner to set said syndrome to one of two predetermined bit patterns depending on whether there is a scheduling request or not.

13. The apparatus according to claim 12, wherein said two predetermined bit patterns comprise a first bit pattern where all bits of said syndrome are zero and a second bit pattern where all bits of said syndrome are one.

14. The apparatus according to any one of claims 9 to 13, wherein said masking means comprises inverter means (14) for inverting all bits of said error checking pattern.

15. The apparatus according to any one of claims 9 to 14, wherein said apparatus is a terminal device (10).

16. An apparatus for receiving control information via a transmission link, said apparatus (20) comprising:
a) checking means (23) for checking an error by using an error checking pattern received with a transmission signal; and
b) determination means (21) for determining a state of said control information based on a syndrome obtained from said checking means (23).

17. The apparatus according to claim 16, wherein said error checking pattern is a cyclic redundancy checking code.

18. The apparatus according to claim 16 or 17, wherein said control information is a scheduling request.

19. The apparatus according to any one of claims 16 to 18, wherein said determination means (21) is adapted to obtain said syndrome by calculating an error checking pattern based on said transmission signal and comparing it with said error checking pattern received with said transmission signal.

20. The apparatus according to any one of claims 16 to 19, wherein said apparatus is a base station device (20).

21. A computer program product comprising code means for generating the steps of method claim 1 when run on a computer device.

22. A computer program product comprising code means for generating the steps of method claim 2 when run on a computer device.

23. A system for signaling control information, said system comprising at least one apparatus according to claim 9 and at least one apparatus according to claim 16.
